# EUROPÄISCHE PATENTSCHRIFT

(11) **EP 1 233 217 B1**
(45) Veröffentlichungstag und Bekanntmachung des Hinweises auf die Patenterteilung: **07.04.2004**
(21) Anmeldenummer: 01103923.7
(22) Anmeldetag: 17.02.2001
(51) Int. Cl.: F16K 1/44

(54) **Fluidischer Antrieb für ein Doppeldichtventil**
Fluid actuator for a double seat valve
Commande fluidique pour une soupape à double siège

(43) Veröffentlichungstag der Anmeldung: 21.08.2002
(73) Patentinhaber: Wilhelm Guth GmbH & Co. KG, 76829 Landau (DE)
(72) Erfinder: Reinsch, Volker, 67661 Kaiserslautern (DE)
(74) Vertreter: Patentanwälte Möll und Bitterich

(56) Entgegenhaltungen:
- FR-A- 2 777 625
- US-A- 6 014 983
- US-B1- 6 186 163

## Beschreibung

Die Erfindung betrifft fluidische Antriebe für Doppeldichtventile gemäß dem Oberbegriff des Anspruchs 1.

Aus der DE 198 22 424 A ist ein der Oberbegriff des unabhängigen Anspruchs 1 entsprechendes Doppeldichtventil bekannt, welches ein in einer Durchgangsöffnung seines Ventilgehäuses translatorisch verschiebbares Schließglied mit zwei gegenseitig beabstandeten Dichtungen besitzt, die mit zwei zylindrischen Sitzflächen in der Durchgangsöffnung des Ventilgehäuses zwei axial beabstandete Abdichtungsstellen bilden. Dieses Schließglied kann einen Haupthub, bei dem die Durchgangsöffnung ganz geöffnet bzw. ganz geschlossen wird, und zwei Spülhübe, bei denen die obere bzw. die untere Dichtung für einen Reinigungsvorgang frei zugänglich wird, während die Durchgangsöffnung verschlossen bleibt, ausführen. Dank dieser konstruktiven Einfachheit ist dieses Ventil äußerst betriebssicher. Allerdings ist keiner der derzeit bekannten fluidischen Antriebe in der Lage, das Schließglied so zu bewegen, dass es den Haupthub zum Öffnen und Schließen des Ventildurchgangs und die beiden Spülhübe ausführt.

Aus der FR 27 77 625 A ist ein Doppelsitzventil mit zwei durch Anschläge gekoppelten, ansonsten unabhängig voneinander zu bewegenden Schließgliedern offenbart. Ebenfalls offenbart ist ein fluidischer Antrieb. Dieser umfasst einen Haupttrieb und zwei Hilfstriebe. Der Kolben des einen Hilfstriebs sitzt neben dem Kolben des Haupttriebs im Zylinder des Haupttriebs. Der zweite Hilfstrieb ist auf dem Zylinder des Haupttriebs festgeschraubt. Dank dieser Konstruktion werden die beiden Ventilteller über getrennte, konzentrisch angeordnete Kolbenstangen so bewegt, dass sie entweder gemeinsam bewegt einen Öffnungs- und Schließhub oder einzeln bewegt einen der beiden Spülhübe ausführen. Auf diese Weise erfüllt dieser bekannte Antrieb zwar die gewünschten Funktionen, ist jedoch sehr kompliziert aufgebaut. Zur Betätigung des in der DE 198 22 424 A beschriebenen Doppeldichtventils mit nur einem einzigen Schließglied ist er völlig ungeeignet.

Der vorliegenden Erfindung liegt daher die Aufgabe zugrunde, einen fluidischen Antrieb anzugeben, der genau diese Funktion erfüllt.

Diese Aufgabe wird gelöst durch einen fluidischen Antrieb mit den Merkmalen des Anspruchs 1.

Der erfindungsgemäße Antrieb verwendet für jede Bewegung des Schließglieds, d. h. für den Öffnungs- und Schließhub und die beiden Spülhübe, jeweils einen eigenen Antrieb, bestehend aus Zylinder, Kolben und Feder, wobei die Federn die Kolben in eine definierte Grundstellung bewegen. Der erfindungsgemäße Antrieb besitzt nur wenige bewegliche Teile, wodurch eine hohe Zuverlässigkeit erreicht wird. Gleichzeitig bildet der gemeinsame Zylinder der Hilfstriebe die Außenwand des gesamten Antriebs, wodurch dieser leicht zu reinigen ist.

Gemäß einer Weiterbildung der Erfindung sind die Hilfstriebe gleich. Dadurch wird ein weiterer Rationalisierungseffekt erzielt.

Gemäß einer Ausgestaltung der Erfindung sind die Kolbenflächen der Hilfstriebe größer als die des Haupttriebs. Dadurch lassen sich die Kolben der Hilfstriebe auch gegen größere Kräfte bewegen, ohne dass der Fluiddruck erhöht werden muss.

Gemäß einer Weiterbildung der Erfindung ist der Hauptkolben durch Führungsstangen geführt. Dadurch wird ein Verdrehen des Kolbens verhindert.

Gemäß einer Weiterbildung hierzu sind die Führungsstangen hohl und dienen als Fluidzuführung zu Haupt- und/oder Hilfstrieb. Dadurch ist es möglich, alle Fluidanschlüsse des Ventils am Kopf des Antriebs zu vereinen.

Gemäß einer bevorzugten Ausgestaltung der Erfindung ist die Federkonstante der Federn der Hilfstriebe größer als die der Hauptfeder. Dadurch ist sichergestellt, dass der Haupttrieb seine zentrierte Position auch dann beibehält, wenn er Arbeit leistet.

Vorteilhafterweise sind die beweglichen Anschläge als Buchsen ausgebildet, die im Zylinder geführt sind. Dies ergibt eine einfache Konstruktion und schnelle Montage. Außerdem erfolgt die Übertragung der Federkräfte über die Anschläge auf die Zylinderwand mit minimal möglichem Druck.

Als Fluid zur Betätigung des Antriebs ist Pressluft ebenso geeignet wie Hydraulikflüssigkeit.

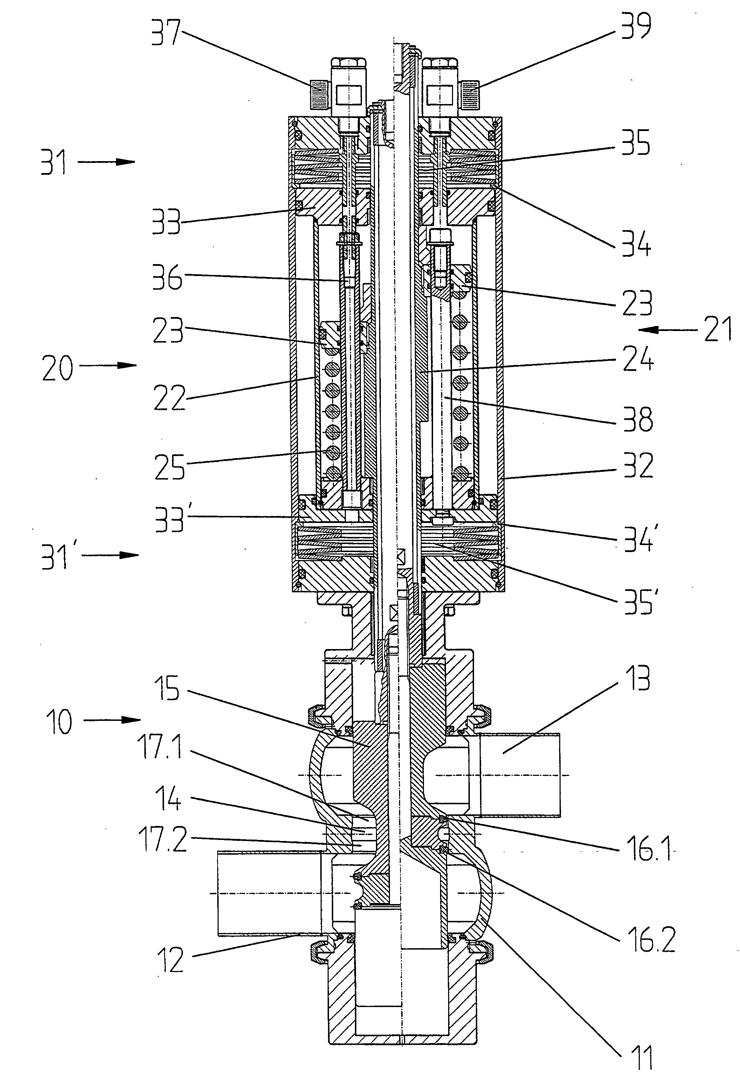

Anhand der Zeichnung soll die Erfindung in Form eines Ausführungsbeispiels näher erläutert werden.

Die Figur zeigt einen Längsschnitt durch ein Doppeldichtventil 10 mit zugehörigem Antrieb 20, wobei die linke Hälfte des Bildes das Ventil 10 in geöffneter Position, die rechte Hälfte des Bildes das Ventil 10 in geschlossener Position zeigt.

Das Ventil 10, das im übrigen in der DE 198 22 424 A ausführlich beschrieben ist, besitzt ein Ventilgehäuse 11 mit zwei Anschlussstutzen 12, 13. Zwischen diesen besteht ein Hauptdurchgang 14, der mit Hilfe eines Schließgliedes 15 verschlossen oder freigegeben werden kann. Das Schließglied 15 ist translatorisch bewegbar. Es besitzt zwei axial beabstandete Dichtungen 16.1, 16.2, die mit zwei zylindrischen Dichtsitzen 17.1, 17.2 im Bereich des Hauptdurchgangs 14 korrespondieren.

Das Schließglied 15 ist in der Lage, drei Hübe durchzuführen: einen Haupthub zum Öffnen und Schließen des Hauptdurchgangs 14, wie in der linken Hälfte des Bildes dargestellt, und zwei Spülhübe, bei denen das Schließglied 15 nur jeweils so weit angehoben oder abgesenkt wird, dass eine der beiden Dichtungen 16.1, 16.2 von ihrem Dichtsitz 17.1, 17.2 abhebt, während die jeweils andere Dichtung 16.2, 16.1 den Hauptdurchgang 14 weiterhin verschließt. Um diese drei Hübe ausführen zu können, ist der fluidische Antrieb 20 mit drei Zylinder-Kolben-Einheiten ausgerüstet, die einen Haupttrieb 21 und zwei Hilfstriebe 31, 31' bilden. Dabei sind die beiden Hilfstriebe 31, 31' identisch aufgebaut. Sie umfassen je einen Kolben 33, 33', die in einem gemeinsamen Zylinder 32 gelagert sind. Jeder Hilfstrieb 31, 31' besitzt ein innenliegendes Federpaket 35, 35', das sich gegen einen beweglichen Anschlag 34, 34' abstützt. Jeder Anschlag 34, 34' sitzt in einer Ausdrehung in der Innenwand des Zylinders 32, wobei die Federpakete 35, 35' den Anschlägen 34, 34' eine definierte Grundstellung verleihen.

Der Haupttrieb 21 wird gebildet durch einen Zylinder 22 mit einem Kolben 23, den eine Feder 25 in eine definierte Grundposition fährt, wie in der rechten Hälfte des Bildes dargestellt. In der Grundposition ist der Hauptdurchgang 14 des Ventils 10 verschlossen.

Der Zylinder 22 des Haupttriebs 21 ist beidseitig mit den Kolben 33, 33' der beiden Hilfstriebe 31, 31' verbunden. Solange die Hilfstriebe 31, 31' nicht aktiviert werden, befindet sich der Haupttrieb 21 in einer mittleren Position.

Der Kolben 23 des Haupttriebs wird zusätzlich von Führungsstangen 36, 38 geführt. Die linke Führungsstange 36 ist hohl und mit einem externen Fluidanschluss 37 ausgerüstet, so dass Druckfluid zu dem unteren Hilfstrieb 31' geleitet wird. Ein weiterer Fluidanschluss 39 führt Druckfluid durch den Kolben 33 des oberen Hilfstriebs 31 in den Haupttrieb 21.

Es versteht sich, dass auch der obere Hilfstrieb 31 einen Druckmittelanschluss besitzt, der in der Zeichnung jedoch nicht dargestellt ist.

Befindet sich der Haupttrieb 21 in seiner Grundposition, wie in der rechten Hälfte der Zeichnung dargestellt, und wird in den oberen Hilfstrieb 31 Druckfluid gepresst, so bewegt sich dessen Kolben 33 mit dem Haupttrieb 21 sowie dem Kolben 33' und dem beweglichen Anschlag 34' des unteren Hilfstriebs 31' gegen die Kraft der unteren Feder 35' nach unten. Dadurch wird das Schließglied 15 nach unten gefahren, bis die untere Dichtung 16.2 frei kommt und gespült werden kann. Dieser Spülhub wird dadurch begrenzt, dass der bewegliche Anschlag 34' gegen den Boden des Hilfstriebs 31' stößt.

Zum Spülen der oberen Dichtung 16.1 wird das Druckfluid über den Anschluss 37 und die hohle Führungsstange 36 in den unteren Hilfstrieb 31' geleitet, wodurch der Haupttrieb 21 gegen die Kraft der Feder 35 des oberen Hilfstriebs 31 angehoben wird. Auch hier begrenzt der Anschlag 34 diesen Spülhub.

Sind die beiden Hilfstriebe 31, 31' drucklos, so drücken die Federn 35, 35' die beweglichen Anschläge 34, 34' gegen eine im Zylinder 32 ausgebildete Stufe, so dass der Haupttrieb 21 kräftefrei positioniert ist.

## Patentansprüche

1. Fluidischer Antrieb (20) für ein Doppeldichtventil (10), welches ein in einer Durchgangsöffnung (14) seines Ventilgehäuses (11) translatorisch verschiebbares Schließglied (15) mit zwei gegenseitig beabstandeten Dichtungen (16.1, 16.2) besitzt, die mit zwei zylindrischen Sitzflächen (17.1, 17.2) in der Durchgangsöffnung (14) des Ventilgehäuses (11) zwei axial beabstandete Abdichtungsstellen bilden, wobei der Antrieb (20) einen Haupttrieb (21) für den Öffnungshub und zwei Hilfstriebe (31, 31') für Reinigungshübe zum Spülen je einer Dichtung (16.1, 16.2) umfasst, **gekennzeichnet durch** die Merkmale:
- der Haupttrieb (21) umfasst
― einen Zylinder (22),
― darin eingedichtet einen Kolben (23),
― daran befestigt eine Kolbenstange (24), die das Schließglied (15) bewegt,
― und eine Hauptfeder (25), die Kolben (23) und Kolbenstange (24) in eine definierte Grundstellung bewegt,
- jeder Hilfstrieb (31, 31') umfasst
― einen Zylinder (32),
― darin eingedichtet einen Kolben (33, 33'),
― einen hubbeweglichen Anschlag (34, 34')
― und eine Feder (35, 35'), die den Anschlag (34, 34') und den Kolben (33, 33') in eine definierte Grundstellung bewegt,
- die Hilfstriebe (31, 31') besitzen einen gemeinsamen Zylinder (32),
- der Zylinder (22) des Haupttriebs (21) ist zwischen den Kolben (33, 33') der Hilfstriebe (31, 31') befestigt,
- die Anschläge (34, 34') begrenzen den Hub der Hilfstriebe (31, 31') auf die Reinigungshübe.

2. Antrieb nach Anspruch 1, **gekennzeichnet durch** das Merkmal:
- die Hilfstriebe (31, 31') sind gleich.

3. Antrieb nach Anspruch 1 oder 2, **gekennzeichnet durch** das Merkmal:
- die Kolbenfläche des Hilfstriebs (31, 31') ist größer als die des Haupttriebs (21).

4. Antrieb nach einem der Ansprüche 1 bis 3, **gekennzeichnet durch** das Merkmal:
- die Federkonstante der Federn (35, 35') der Hilfstriebe (31, 31') ist größer als die der Hauptfeder (25).

5. Antrieb nach einem der Ansprüche 1 bis 4, **gekennzeichnet durch** die Merkmale:
- der Hauptkolben (23, 33, 33') ist **durch** Führungsstangen (36, 38) gegen Verdrehen gesichert,
- wenigstens eine der Führungsstangen (36, 38) ist hohl und dient als Fluidzuführung zu Haupt- und/oder Hilfstrieb (21, 31').

6. Antrieb nach Anspruch 5, **gekennzeichnet durch** das Merkmal:
- der Haupttrieb (21) ist wendbar.

7. Antrieb nach einem der Ansprüche 1 bis 6, **gekennzeichnet durch** das Merkmal:
- die beweglichen Anschläge (34, 34') sind als Buchsen ausgebildet, die im Zylinder (32) geführt sind.

8. Antrieb nach einem der Ansprüche 1 bis 7, **gekennzeichnet durch** das Merkmal:
- die Fluidzufuhr zu Haupttrieb (21) und Hüfstrieben (31, 31') erfolgt nur vom Kopf des Antriebs aus.

9. Antrieb nach einem der Ansprüche 1 bis 7, **gekennzeichnet durch** die Merkmale:
- auf den Kopf des Antriebs (20) ist ein Steuerkopf aufsetzbar,
- der Steuerkopf enthält Pilotventile und Initiatoren.

## Claims

1. A fluid drive unit (20) for a double seal valve (10) which has a closing member (15) which can be displaced linearly in a passage opening (14) of its valve housing (11) and which has two spaced apart seals (16.1,16.2) which with two cylindrical seats (17.1,17.2) in the passage opening (14) of the valve housing (11) form two axial spaced apart sealing locations, wherein the drive unit (20) comprises a main drive (21) for the opening stroke and two auxiliary drives (31,31') for cleaning strokes for flushing a respective seal (16.1,16.2), **characterised by** the features:
- the main drive (21) comprises,
- a cylinder (22),
- a piston (23) sealed therein,
- a piston rod fastened thereto, which moves the closing member (15),
- and a main spring (25) which moves the piston (23) and the piston rod (24) into a defined initial position,
- each auxiliary drive (31,31') comprises
- a cylinder (32),
- a piston (33,33') sealed therein,
- a stop member (34,34') of movable travel
- and a spring (35,35') which moves the stop member (34,34') and the piston (33,33') into a defined initial position,
- the auxiliary drives (31,31') have a common cylinder (32) ,
- the cylinder (22) of the main drive (21) is secured between the piston (33,33') of the auxiliary drives (31,31'),
- the stop members (34,34') limit the stroke of the auxiliary drives (31,31') to the cleaning strokes.

2. A drive unit according to Claim 1, **characterised by** the feature:
- the auxiliary drives (31,31') are the same.

3. A drive unit according to Claim 1 or 2, **characterised by** the feature:
- the piston area of the auxiliary drive (31,31') is greater than that of the main drive (21).

4. A drive unit according to any one of Claims 1 to 3, **characterised by** the feature:
- the spring rate of the springs (35,35') of the auxiliary drives (31,31') is higher than that of the main spring (25).

5. A drive unit according to any one of Claims 1 to 4, **characterised by** the features:
- the main piston (23,33,33') is prevented from twisting by guide rods (36,38),
- at least one of the guide rods (36,38) is hollow and serves as a fluid feed to the main drive and/or auxiliary drive (21,31').

6. A drive unit according to Claim 5, **characterised by** the feature:
- the main drive (21) can be reversed.

7. A drive unit according to any one of the Claims 1 to 6, **characterised by** the feature:
- the movable stop members (34,34') are in the form of bushes which are guided in the cylinder (32).

8. A drive unit according to any one of Claims 1 to 7, **characterised by** the feature:
- the fluid feed to the main drive (21) and auxiliary drives (31,31') takes place only from the head of the drive unit.

9. A drive unit according to any one of Claims 1 to 7, **characterised by** the features:
- a control head can be mounted on the head of the drive unit (20),
- the control head contains pilot valves and initiators.

## Revendications

1. Commande fluidique (20) pour une soupape à double joint (10), disposant d'un organe de fermeture (15) coulissant en translation dans un trou de passage (14) de sa cage de soupape (11) avec deux joints d'étanchéité (16.1, 16.2) écartés l'un de l'autre, qui forment deux points étanches écartés de manière axiale avec deux surfaces (17.1, 17.2) cylindriques d'assise dans le trou de passage (14) de la cage de soupape (11), la commande (20) comprenant une commande principale (21) pour la course d'ouverture et deux commandes auxiliaires (31, 31') pour la course de nettoyage destinée au rinçage d'un des joints d'étanchéité (16.1, 16.2), **caractérisée par** les critères suivants :
- la commande principale (21) comprend
- un vérin (22),
- à l'intérieur de celui-ci est intégré un piston (23),
- attachée à ce dernier, une tige de piston (24), qui déplace l'organe de fermeture (15),
- et un ressort principal (25) qui déplace le piston (23) et la tige de piston (24) vers une position initiale définie,
- chaque commande auxiliaire (31, 31') comprend
- un vérin (32),
- à l'intérieur de celui-ci est intégré un piston (33, 33'),
- une butée mobile (34, 34')
- et un ressort (35, 35') qui déplace la butée (34, 34') et le piston (33, 33') vers une position initiale définie,
- les commandes auxiliaires (31, 31') disposent d'un vérin (32) commun,
- le vérin (22) de la commande principale (21) est fixé entre les pistons (33, 33') des commandes auxiliaires (31, 31'),
- les butées (34, 34') limitent la course des commandes auxiliaires (31, 31') aux courses de nettoyage.

2. Commande selon la revendication 1, **caractérisée par** le critère suivant :
- les commandes auxiliaires (31, 31') sont identiques.

3. Commande selon la revendication 1 ou 2, **caractérisée par** le critère suivant :
- la surface du piston de la commande auxiliaire (31, 31') est supérieure à celle de la commande principale (21).

4. Commande selon l'une quelconque des revendications 1 à 3, **caractérisée par** le critère suivant :
- la constante de rappel des ressorts (35, 35') dés commandes auxiliaires (31, 31') est supérieure à celle du ressort principal (25).

5. Commande selon l'une quelconque des revendications 1 à 4, **caractérisée par** les critères suivants :
- le piston principal (23, 33, 33') est protégé contre la torsion au moyen de barres de guidage (36, 38),
- au moins une desdites barres de guidage (36, 38) est creuse et sert d'alimentation en fluide jusqu'à la commande principale et/ou auxiliaire (21, 31').

6. Commande selon la revendication 5, **caractérisée par** le critère suivant :
- la commande principale (21) est renversable.

7. Commande selon l'une quelconque des revendications 1 à 6, **caractérisée par** le critère suivant :
- les butées mobiles (34, 34') sont réalisées sous forme de manchons qui sont guidés dans le vérin (32).

8. Commande selon l'une quelconque des revendications 1 à 7, **caractérisée par** le critère suivant :
- l'alimentation en fluide jusqu'à la commande principale (21) et jusqu'aux commandes auxiliaires (31, 31') se fait uniquement depuis la tête de la commande.

9. Commande selon l'une quelconque des revendications 1 à 7, **caractérisée par** les critères suivants :
- une tête de contrôle est montée sur la tête de la commande (20),
- la tête de contrôle contient des soupapes pilotes et des excitants.
